# EUROPEAN PATENT APPLICATION

(11) **EP 3 054 561 A1**
(43) Date of publication of application: **10.08.2016**
(21) Application number: 14849035.2
(22) Date of filing: 12.09.2014
(51) Int. Cl.: H02J 50/00, B60L 5/00, B60L 11/18, B60M 7/00, H02J 7/00

(54) **NON-CONTACT CHARGING SYSTEM, VEHICLE, AND POWER-FEEDING DEVICE**

(30) Priority: 26.09.2013 JP 2013199608
(71) Applicant: Kabushiki Kaisha Toyota Jidoshokki, Kariya-shi, Aichi 448-8671 (JP)
(72) Inventor: HIKA, Koji, Kariya-shi Aichi 448-8671 (JP)
(74) Representative: TBK
(86) International application number: PCT/JP2014/074272
(87) International publication number: WO 2015/045920

(57) **Abstract**

A power supply device controller 11a of a power supply device 4a and power supply device controllers of power supply devices 4b, 4c validate a time t for detecting the output time of the validation power with output times ta, tb, tc of the validation power, respectively. Because the time t for detecting the output time of the validation power matches the output time ta of the validation power, the power supply device controller 11a determines that a vehicle 3 is parked at a charging station 2a comprising the power supply device 4a.

## Description

### TECHNICAL FIELD

This invention relates to a contactless charging system for a battery-carrying vehicle.

### BACKGROUND ART

Electric vehicles (EVs) that travel using an electric motor and plug-in hybrid vehicles (PHVs) that travel using both an electric motor and a gasoline engine are increasing in popularity. A battery is installed in an EV and a PHV, and the vehicle is made to travel by driving the motor using electric energy stored in the battery.

At present, a charging system for an EV or a PHV is typically realized by disposing charging stations in each of a plurality of parking spaces provided in a parking area so that the vehicle can be charged while parked in the parking space. Further, power may be supplied to the vehicle from the charging station using either a contact charging system in which the charging station is connected to the vehicle by a dedicated charging cable, or a contactless charging system in which power is supplied using the principle of electromagnetic induction or the like while a state of contactless is maintained between the charging station and the vehicle.

Furthermore, when a vehicle is charged from a charging station, various control commands have to be exchanged between the charging station and the vehicle. In the contact charging system in which the charging station is connected to the vehicle by a charging cable, the various control commands can be exchanged by wired communication using a communication line in the charging cable, but in the case of a contactless charging system in which a charging cable is not used, the various control commands have to be exchanged between the charging station and the vehicle by contactless communication such as wireless communication. At this time, when there are a plurality of charging stations disposed in the parking area, there is a need for the vehicle by some means to specify which charging station it should establish wireless communication connection with.

Patent Document 1 discloses a device that performs contactless communication between a vehicle and power supply devices provided at a plurality of parking positions of charging stations. This contactless communication device comprises a charging device and a power receiving coil provided on the vehicle and power supply devices and power supply coils provided at the charging stations. A wireless communication unit of the charging device and an antenna of the charging device, and wireless communication units of the charging stations and antennas of the charging stations are provided to be used for wireless communication between the charging device of the vehicle and the charging stations. Validation power is output in order from the power supply coils provided at each power supply device of the charging stations in order to specify the charging station where the vehicle is parked, among the plurality of charging stations. Where the validation power is received by the power receiving coil, a wireless signal is transmitted from the wireless communication unit of the charging device of the vehicle through the antenna of the charging device, and the wireless signal is received by the wireless communication units of the charging stations through the antennas of the charging stations. Where a wireless signal is not received by the wireless communication unit of the charging station within a predetermined interval of time after the output of the validation power, it is determined that the vehicle is not present at the parking position of this particular power supply device. Meanwhile, where the wireless signal has been received by the wireless communication unit of the charging station within the predetermined interval of time after the output of the validation power, it is determined that the vehicle is present at the parking position of this power supply device. As a result, it is determined at which charging device the vehicle is parked.

[Patent Document 1] Japanese Patent Application Laid Open No. 2011-223657.

### SUMMARY OF THE INVENTION

### PROBLEMS TO BE SOLVED BY THE INVENTION

However, the problem associated with the contactless communication system disclosed in Patent Document 1 is that it is necessary to wait for a certain time until it is determined whether or not the wireless signal is received by the wireless communication unit of the charging station within the predetermined interval of time after the output of the validation power for each charging device, and therefore it takes time to specify the parking position of the vehicle.

The present invention has been created to resolve the aforementioned problem, and it is an object of the present invention to provide a contactless charging system, a vehicle, and a power supply device that can easily and reliably specify a charging station with which wireless communication connection is to be established by the vehicle.

### MEANS FOR SOLVING THE PROBLEMS

The present invention provides a contactless charging system that comprises a charging device installed in a vehicle, and at least one charging station and performs contactless charging, wherein the at least one charging station includes: a power supply device that supplies power to the charging device; a power supply device wireless communication unit that is provided at the power supply device and performs wireless communication; and a power supply coil that is provided at the power supply device and performs contactless output of validation power and supply contactless of charging power, wherein the charging device includes: a wireless communication unit of the charging device for performing the wireless communication; a power receiving coil to which the validation power is contactlessly input and which contactlessly receives the charging power; and a validation power detector for detecting the validation power received by the power receiving coil, and wherein, in the wireless communication, communication is possible between the charging device and at least one power supply device, the power supply device holds in advance a pattern of the power to be supplied to the power supply coil for generating the validation power on the basis of different types of identification information, the pattern of power to be supplied to the power supply coil for generating the validation power is generated such that the validation power detector can detect the identification information when the validation power is detected by the validation power detector, the charging device sends a request for starting the power supply device to the power supply device, the power supply device which has received the request for starting the power supply device outputs the validation power from the power supply coil, the validation power is input to the power receiving coil, the validation power detector detects the validation power, the charging device sends a wireless connection request including information based on the identification information, the at least one power supply device validates each piece of identification information with the information based on the identification information, and a power supply device for which the identification information has matched the information based on the identification information responds to the charging device, thereby specifying the power supply device which is to perform the wireless communication with the charging device, among the at least one or more power supply devices, and establishing the wireless communication between the power supply device and the charging device.

The invention also provides a vehicle equipped with a charging device, which is contactlessly charged by at least one charging station including: a power supply device that supplies power to the charging device; a wireless communication unit of the power supply device that is provided at the power supply device and performs wireless communication; and a power supply coil that is provided at the power supply device and performs contactless output of validation power and contactless supply of charging power, wherein the charging device includes: a wireless communication unit of the charging device for performing the wireless communication; a power receiving coil which is provided in the charging device, to which the validation power is contactlessly input and which contactlessly receives the charging power; and a validation power detector for detecting the validation power received by the power receiving coil, and wherein, in the wireless communication, communication is possible between the charging device and at least one power supply device, the power supply device holds in advance a pattern of the power to be supplied to the power supply coil for generating the validation power on the basis of different types of identification information, the pattern of power to be supplied to the power supply coil for generating the validation power is generated such that the validation power detector can detect the identification information when the validation power is detected by the validation power detector, the charging device sends a request for starting the power supply device to the power supply device, the power supply device which has received the request for starting the power supply device outputs the validation power from the power supply coil, the validation power is input to the power receiving coil, the validation power detector detects the validation power, the charging device sends a wireless connection request including information based on the identification information, the at least one power supply device validates each piece of identification information with the information based on the identification information, and a power supply device for which the identification information has matched the information based on the identification information responds to the charging device, thereby specifying the power supply device which is to perform the wireless communication with the charging device, among the at least one or more power supply devices, and establishing the wireless communication between the power supply device and the charging device.

The invention also provides a power supply device including: a wireless communication unit of the power supply device for performing wireless communication; and a power supply coil that performs contactless output of validation power and supply of charging power, the power supply device being provided at at least one charging station and supplying power to a charging device installed in a vehicle, wherein the charging device includes: a wireless communication unit of the charging device for performing the wireless communication; a power receiving coil to which the validation power is input contactlessly and which contactlessly receives the charging power; and a validation power detector for detecting the validation power received by the power receiving coil, and wherein, in the wireless communication, communication is possible between the charging device and at least one power supply device, the power supply device holds in advance a pattern of the power to be supplied to the power supply coil for generating the validation power on the basis of different types of identification information, the pattern of the power to be supplied to the power supply coil for generating the validation power is generated such that the validation power detector can detect the identification information when the validation power is detected by the validation power detector, the charging device sends a request for starting the power supply device to the power supply device, the power supply device which has received the request for starting the power supply device outputs the validation power from the power supply coil, the validation power is input to the power receiving coil, the validation power detector detects the validation power, the charging device sends a wireless connection request including information based on the identification information, the at least one power supply device validates each piece of identification information with the information based on the identification information, and a power supply device for which the identification information have matched the information based on the identification information responds to the charging device, thereby specifying the power supply device which is to perform the wireless communication with the charging device, among the at least one or more power supply devices, and establishing the wireless communication between the power supply device and the charging device.

### EFFECTS OF INVENTION

In accordance with the present invention, the power supply device holds in advance a pattern of the power to be supplied to the power supply coil for generating the validation power on the basis of different types of identification information, the pattern of the power to be supplied to the power supply coil for generating the validation power is generated such that the validation power detector can detect the identification information when the validation power is detected by the validation power detector, the charging device sends a request for starting the power supply device to the power supply device, the power supply device which has received the request for starting the power supply device outputs the validation power from the power supply coil, the validation power is input to the power receiving coil, the validation power detector detects the validation power, the charging device sends a wireless connection request including information based on the identification information, the at least one power supply device validates each piece of identification information with the information based on the identification information, and a power supply device for which the identification information has matched the information based on the identification information responds to the charging device, thereby making it possible to easily and reliably specify the charging station with which the wireless communication connection is to be established by the vehicle.

### Brief Description of Drawings

Fig. 1 is a schematic diagram of the contactless charging system according to Embodiment 1 of the invention;
Fig. 2 is a schematic diagram of the power supply device and charging device provided in the contactless charging system according to Embodiment 1 of the invention;
Fig. 3 is a sequence diagram of the contactless charging system according to Embodiment 1 of the invention;
Fig. 4 is a schematic diagram illustrating the detection timing of the validation power in the validation power detector of the contactless charging system according to Embodiment 1 of the invention;
Fig. 5 illustrates an operation for comparing the detection timing of the validation power in the validation power detector of the contactless charging system according to Embodiment 1 of the invention with the validation power output time assigned in advance to each charging device;
Fig. 6 is a sequence diagram of the contactless charging system according to Embodiment 2 of the invention;
Fig. 7 is a schematic diagram illustrating the detection timing of the validation power in the validation power detector of the contactless charging system according to Embodiment 2 of the invention;
Fig. 8 illustrates an operation for comparing the detection of the validation power in the validation power detector of the contactless charging system according to Embodiment 2 of the invention with the validation power output value assigned in advance to each charging device.
Fig. 9 is a sequence diagram of the contactless charging system according to Embodiment 3 of the invention.
Fig. 10 is a schematic diagram illustrating the detection timing of the validation power in the validation power detector of the contactless charging system according to Embodiment 3 of the invention.
Fig. 11 illustrates an operation of comparing the detection timing of the validation power in the validation power detector of the contactless charging system according to Embodiment 3 of the invention with the validation power output value assigned in advance to each charging device.

### EMBODIMENTS FOR CARRYING OUT THE INVENTION

The embodiments of the invention will be explained hereinbelow with reference to the appended drawings.

### Embodiment 1

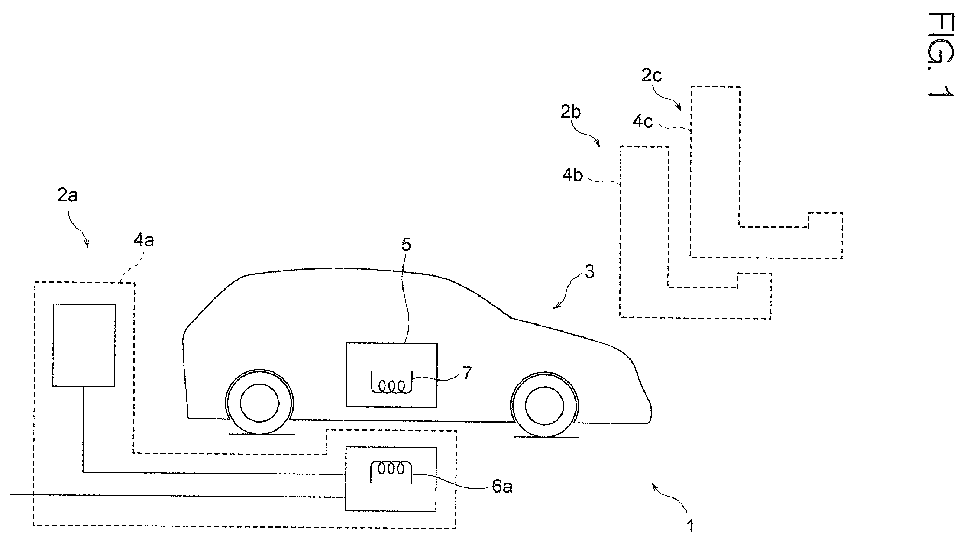

The configuration of the contactless charging system according to Embodiment 1 of the invention is shown in Fig. 1.

A contactless charging system 1 is constituted by a plurality of charging stations and a charging device 5 provided in a vehicle 3. In Embodiment 1, three charging stations, namely, a charging station 2a and charging stations 2b, 2c, which have the same configuration as the charging station 2a, are provided. The charging station 2a is provided with a power supply device 4a. The power supply device 4a is provided with a power supply coil 6a, and the charging device 5 is provided with a power receiving coil 7. The power supply coil 6a of the charging station 2a is appropriately disposed, for example, on the floor surface of the charging station 2a, and the power receiving coil 7 is appropriately disposed, for example, on the bottom surface of the vehicle 3, so that the power supply coil 6a and the power receiving coil 7 face each other, with a predetermined air gap being present therebetween, when the vehicle 3 is parked at a predetermined parking position of the charging station 2a. The other two charging stations 2b, 2c (see Fig. 1) also have the same configuration as the charging station 2a.

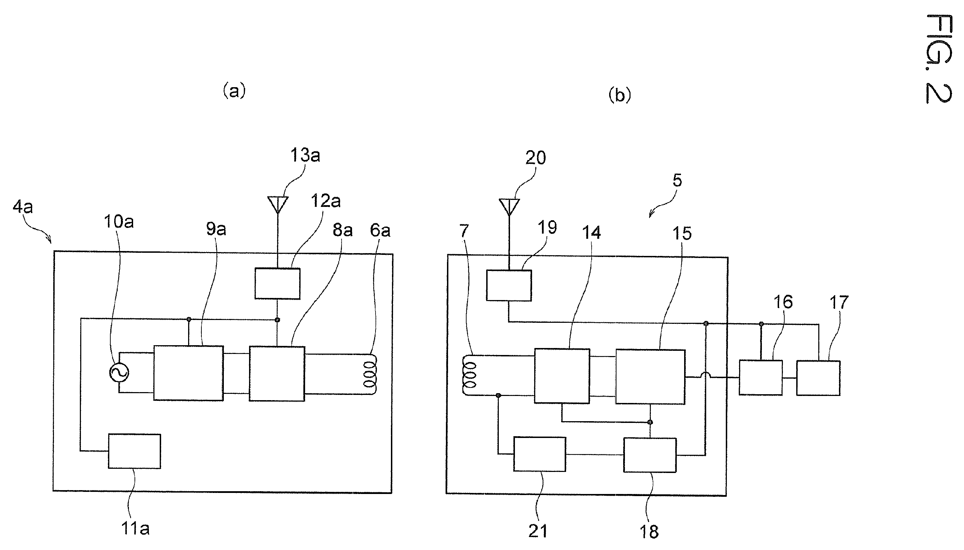

The configuration of the power supply device 4a is shown in Fig. 2(a). The power supply coil 6a is electrically connected to a matching unit 8a of the power supply device. The matching unit 8a of the power supply device is electrically connected to a power source conversion unit 9a. The power source conversion unit 9a is electrically connected to an AC power source 10a. The AC power source 10a is, for example, a 200-V AC power source. A power supply device controller 11a is electrically connected to the matching unit 8a of the power supply device, the power source conversion unit 9a, and a wireless communication unit 12a of the power supply device. A antenna 13a of the power supply device is electrically connected to the wireless communication unit 12a of the power supply device. The other two charging stations 2b, 2c (see Fig. 1) have power supply devices 4b, 4c, respectively, which have the same configuration as the power supply device 4a. The power supply device controller 11a of the power supply device 4a and the power supply device controllers (not shown) of the power supply devices 4b, 4c store different validation power output times ta, tb, tc respectively which are identification information for identifying the power supply devices 4a, 4b, 4c, that have been assigned in advance to the power supply devices 4a, 4b, 4c.

The configuration of the charging device 5 is shown in Fig. 2(b). The power receiving coil 7 is electrically connected to a matching unit 14 of the charging device. The matching unit 14 of the charging device is electrically connected to a rectifier 15. The rectifier 15 is electrically connected to a detector 16 located outside of the charging device 5. The detector 16 is electrically connected to a battery unit 17 located outside of the charging device 5. Further, a validation power detector 21 for detecting the validation power is electrically connected to the power receiving coil 7. The charging device controller 18 is electrically connected to the matching unit 14 of the charging device, the rectifier 15, the detector 16, the battery unit 17, a wireless communication unit 19 of the charging device, and a validation power detector 21. An antenna 20 of the charging device is electrically connected to the wireless communication unit 19 of the charging device.

Next, an operation of the contactless charging system according to Embodiment 1 of the present invention will be described with reference to Figs. 2 to 5.

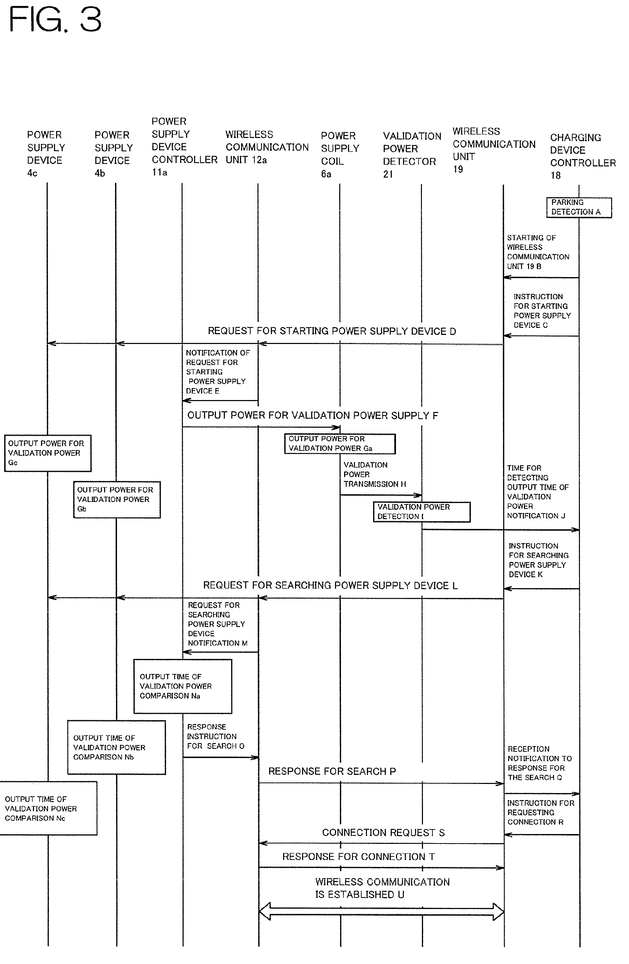

Fig. 3 shows an example of the sequence of operation of the contactless charging system. When the vehicle 3 is parked in the predetermined parking position of the charging station 2a, the charging device controller 18 detects that the vehicle 3 has been parked (A). Any desired means, such as means for detecting an operation of a parking brake of the vehicle 3 or means for detecting that a motive power supply switch of the vehicle 3 has been switched off, may be used as means for detecting the parking at this time.

Once the charging device controller 18 detects that the vehicle 3 has been parked, the charging device controller 18 starts the wireless communication unit 19 of the charging device (B), and the charging device controller 18 sends an instruction for starting the power supply device to the wireless communication unit 19 of the charging device (C). The wireless communication unit 19 of the charging device which has received the instruction for starting the power supply device outputs a request for starting the power supply device to the power supply devices 4a, 4b, 4c by broadcasting through the antenna 20 of the charging device (D). The signal of the request for starting the power supply device which is transmitted at this time includes a MAC address of the wireless communication unit 19 of the charging device. Where the wireless communication unit 12a of the power supply device receives the request for starting the power supply device through the antenna 13a of the power supply device 4a, the wireless communication unit 12a of the power supply device transmits a notification of the request for starting the power supply device to the power supply device controller 11a (E). The power supply device controller 11a verifies the state of the power supply device 4a, and where the power supply is possible, the power supplied from the AC power source 10a is converted in voltage and frequency by the power source conversion unit 9a, then converted into the power for generating the validation power, and supplied as the output power for the validation power to the power supply coil 6a through the matching unit 8a of the power supply device (F). In this case, the power which is, for example, from 10 W to about several tens of watts and sufficiently small by comparison with the charging power of several kilowatts may be the output power for the validation power for generating the validation power. As for the power supply devices 4b, 4c, likewise, the wireless communication units (not shown) of the power supply devices 4b, 4c which have received the request for starting the power supply device transmit a notification of the request for starting the power supply device to the power supply device controllers (not shown) of the power supply devices 4b, 4c, the power supply device controllers (not shown) of the power supply devices 4b, 4c verify the state of the power supply devices 4b, 4c, and where the power supply is possible, the power supplied from the AC power sources (not shown) of the power supply devices 4b, 4c is converted in voltage and frequency by the power source conversion units (not shown) of the power supply devices 4b, 4c and then converted into power for generating the validation power and supplied as the output power for the validation power to the power supply coils (not shown) of the power supply devices 4b, 4c through the matching units (not shown) of the power supply devices 4b, 4c. Therefore, the instruction for starting the power supply device (C) and the request for starting the power supply device (D) are the instruction for outputting the validation power and request for outputting the validation power for outputting the validation power from the power supply coil 6a and the power supply coils (not shown) of the power supply devices 4b, 4c as will be described.

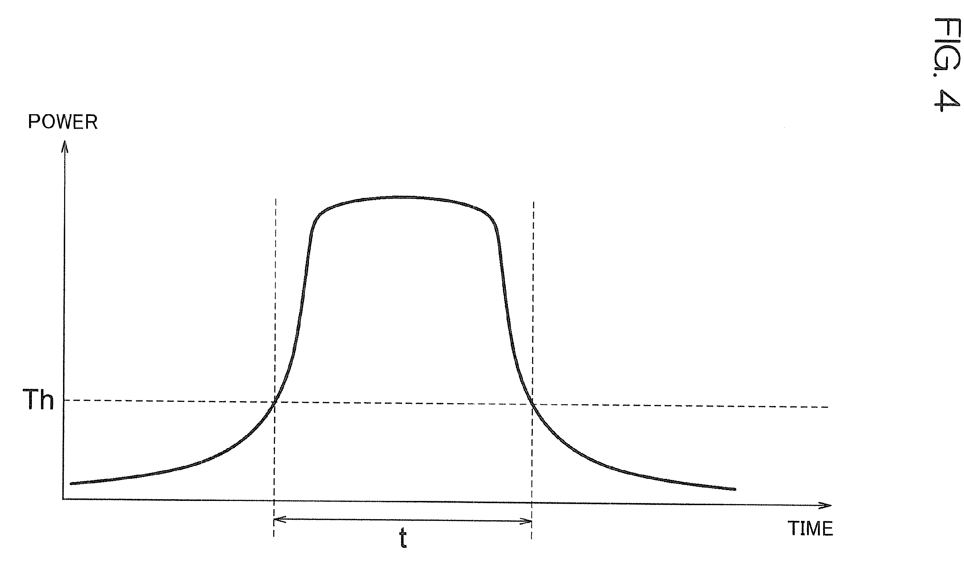

In Embodiment 1, the vehicle 3 is parked at a predetermined parking position of the charging station 2a (see Fig. 1). Thus, where the validation power is output from the power supply coil 6a as a result of supplying the output power for the validation power (Ga), the validation power is generated by the electromagnetic induction interaction in the power receiving coil 7 facing the power supply coil 6a with a predetermined air gap being present therebetween (H). The validation power generated in the power receiving coil 7 is detected by the validation power detector 21 (I). As shown in Fig. 4, in the validation power detector 21, a time t for detecting the output time of the validation power within the range in which the detected value exceeds a threshold Th is detected. This time t for detecting the output time of the validation power is information based on identification information. In this case, the detected value may be a current value or a voltage value. Further, as shown in Fig. 3, the power for generating the validation power in the power supply coil 6a of the power supply device 4a and the power supply coils (not shown) of the power supply devices 4b, 4c is controlled on the basis of the pattern of the power created by the power supply device controller 11a of the power supply device 4a and the power supply device controllers (not shown) of the power supply devices 4b, 4c such that the time t for detecting the output time of the validation power matches the output times ta, tb, tc of the validation power. The validation power detector 21 notifies the charging device controller 18 of the time t for detecting the output time of the validation power (J). The validation power is also supplied to the power supply coils (not shown) of the power supply devices 4b, 4c and the validation power is output (Gb, Gc). However, since the vehicle 3 performing the operations of the sequence of Embodiment 1 is not at the parking position of the charging stations 2b, 2c, the power receiving coil 7 does not face the power supply coil with a predetermined air gap being present therebetween, and no electromagnetic induction is generated. Therefore, the validation power is not transmitted to the vehicle 3.

The charging device controller 18 transmits a instruction for searching the power supply device along with the time t for detecting the output time of the validation power to the wireless communication unit 19 of the charging device (K). The wireless communication unit 19 of the charging device outputs a request for searching the power supply device along with the time t for detecting the output time of the validation power by broadcasting through the antenna 20 of the charging device (L).

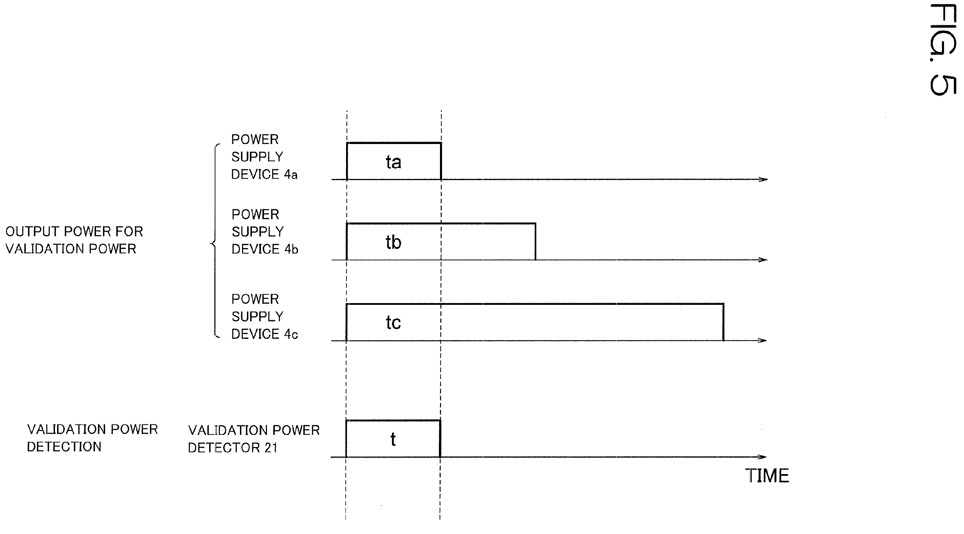

Where the wireless communication unit 12a of the power supply device receives the request for searching the power supply device through the antenna 13a of the power supply device, the wireless communication unit 12a of the power supply device transmits the notification of the request for searching the power supply device along with the time t for detecting the output time of the validation power to the power supply device controller 11a (M). As shown in Fig. 5, the power supply device controller 11a validates the time t for detecting the output time of the validation power with the output time ta of the validation power (Na in Fig. 3). Likewise, in the power supply controllers (not shown) of the power supply devices 4b, 4c which have received the request for searching the power supply device also validate the time t for detecting the output time of the validation power with the output times tb, tc of the validation power (Nb, Nc in Fig. 3). In Embodiment 1, the time t for detecting the output time of the validation power matches the output time ta of the validation power. Therefore, as shown in Fig. 3, the power supply device controller 11a transmits a response instruction for the search to the power supply device wireless communication unit 12a (O). Since the time t for detecting the output time of the validation power does not match the output times tb, tc of the validation power, no operation is performed in the power supply device controllers (not shown) of the power supply devices 4b, 4c.

The wireless communication unit 12a of the power supply device that has received the response instruction for the search transmits a response for the search by unicasting to the wireless communication unit 19 of the charging device through the antenna 13a of the power supply device by using the MAC address of the wireless communication unit of the charging device (P). The wireless communication unit 19 of the charging device receives the response for the search through the antenna 20 of the charging device. The wireless communication unit 19 of the charging device transmits a reception notification to the response for the search to the charging device controller 18 (Q). The charging device controller 18 transmits an instruction for requesting the connection to the wireless communication unit 19 of the charging device (R). The wireless communication unit 19 of the charging device transmits the connection request to the wireless communication unit 12a of the power supply device by unicasting through the antenna 20 of the charging device (S). The wireless communication unit 12a of the power supply device receives the connection request through the antenna 13a of the power supply device. The wireless communication unit 12a of the power supply device transmits the response for the connection to the wireless communication unit 19 of the charging device through the antenna 13a of the power supply device (T). The wireless communication unit 19 of the charging device receives the response for the connection through the antenna 20 of the charging device. As a result, wireless communication is established between the wireless communication unit 12a of the power supply device and the wireless communication unit 19 of the charging device.

As shown in Figs. 2(a) and 2(b), after wireless communication is established, the voltage and frequency of the power supplied from the alternating current power supply 10a is converted by the power supply conversion unit 9a, impedance matching between the matching unit 8a of the power supply device and the matching unit 14 of the charging device is performed, and then the power is supplied to the power supply coil 6a. Charging power is generated in the power receiving coil 7 which is opposite the power supply coil 6a, while maintaining a predetermined air gap by an electromagnetic induction interaction. The charging power is rectified by the rectifier 15 via the matching unit 14 of the charging device, and then charged to the battery unit 17 via the detection unit 16 that is used to detect a voltage and a current.

Thus, the power supply devices 4a, 4b, 4c hold in advance the pattern of the power to be supplied to the power supply coil 6a and the power supply coils (not shown) of the power supply devices 4b, 4c for generating the validation power on the basis of respectively different output times ta, tb, tc of the validation power, the pattern of power to be supplied to the power supply coil 6a and the power supply coils (not shown) of the power supply devices 4b, 4c for generating the validation power is generated such that the validation power detector 21 can detect the output times ta, tb, tc of the validation power when the validation power is detected by the validation power detector 21 the charging device 5 sends the request for starting the power supply device to the power supply devices 4a, 4b, 4c, the power supply devices 4a, 4b, 4c which have received the request for starting the power supply device output the validation power from the power supply coil 6a and the power supply coils (not shown) of the power supply devices 4b, 4c, the validation power is input to the power receiving coil 7, the validation power detector 21 detects the validation power, the charging device 5 sends a wireless connection request including the time t for detecting the output time of the validation power, the power supply devices 4a, 4b, 4c validate each output time ta, tb, tc of the validation power with the time t for detecting the output time of the validation power, and the power supply device 4a for which the output time ta, tb, tc of the validation power have matched the time t for detecting the output time of the validation power responds to the charging device 5, thereby making it possible to specify easily and reliably the charging station 2a which is to establish the wireless communication connection with the vehicle 3.

### Embodiment 2

The configuration of the contactless charging system according to Embodiment 2 of the invention is described hereinbelow. Because the same reference numerals and symbols as those in Figs. 1 to 5 represent the same or similar constitutional elements in the below-described embodiment, the detailed explanations thereof are herein omitted.

In the contactless charging system according to Embodiment 2 of the invention, an output power value is used as the measurement value in Embodiment 1 for specifying the parking position of the vehicle. The different output power values LVa, LVb, LVc of the validation power which are pieces of identification information for identifying the power supply devices 4a, 4b, 4c that has been assigned in advance to the power supply devices 4a, 4b, 4c, are stored in the power supply device controller 11a of the power supply device 4a and power supply device controllers (not shown) of the power supply devices 4b, 4c, respectively. Other features of the contactless charging system are the same as those in Embodiment 1.

The operation of the contactless charging system according to Embodiment 2 of the invention is explained hereinbelow.

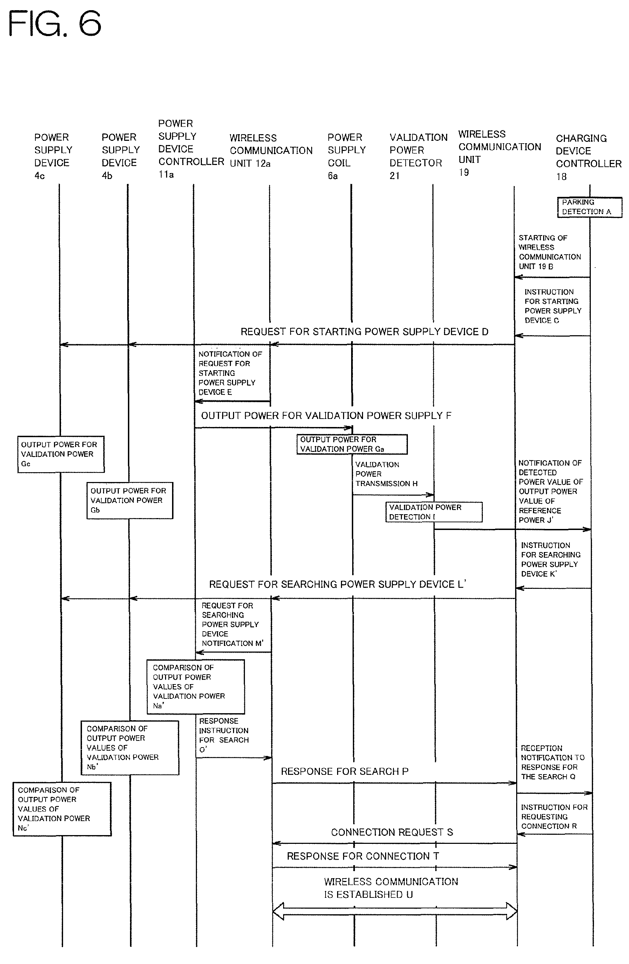

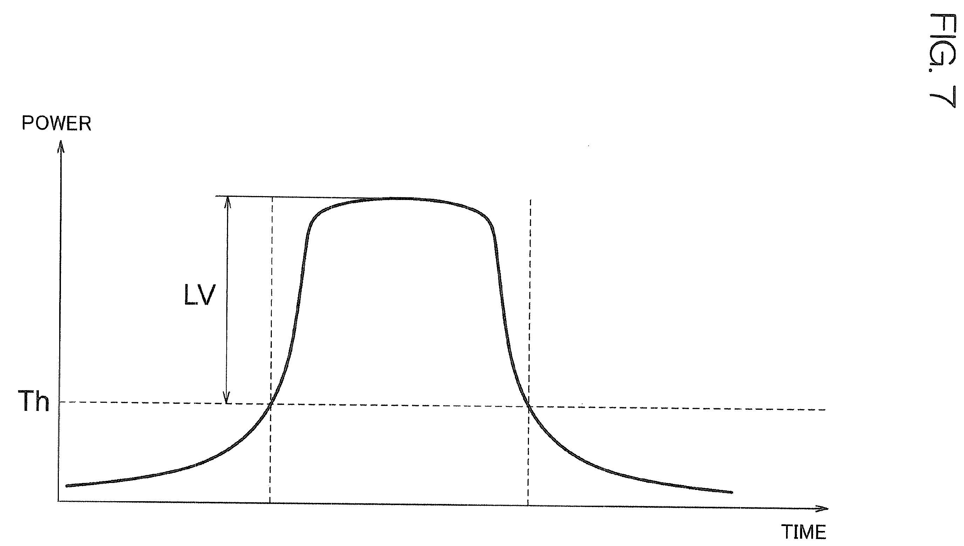

Fig. 6 shows the example of the sequence of Embodiment 2. In Fig. 6, the same letters as those in Fig. 3 represent the same operations, and the operations denoted by the letters of Fig. 3 which are marked with ['] are modified from the corresponding operations shown in Fig. 3. The operations from (A) to (I) which are performed until the validation power generated by the power receiving coil 7 is detected by the validation power detector 21 are the same as those in Embodiment 1. As shown in Fig. 7, a detected power value LV of the output power value of the validation power, for which the detected value exceeds a threshold Th, is detected in the validation power detector 21. This detected power value LV of the output power value of the validation power is information based on the identification information. In this case, the detected value may be a current value or a voltage value. Further, as shown in Fig. 6, the power for generating the validation power in the power supply coil 6a of the power supply device 4a and the power supply coils (not shown) of the power supply devices 4b, 4c is controlled on the basis of the pattern of power created in the power supply device controller 11a of the power supply device 4a and the power supply device controllers (not shown) of the power supply devices 4b, 4c, such that the detected power value LV of the output power value of the validation power matches the output power values LVa, LVb, LVc of the validation power. The validation power detector 21 notifies the charging device controller 18 of the detected power value LV of the output power value of the validation power (J'). The validation power is also supplied to the power supply coils (not shown) of the power supply devices 4b, 4c, and the validation power is output. However, since the vehicle 3 in which the charging preparation sequence has been implemented is not at the parking position of the charging stations 2b, 2c, the power receiving coil 7 does not face the power supply coil with a predetermined air gap being present therebetween, and no electromagnetic induction is generated. Therefore, the validation power is not transmitted to the vehicle 3.

The charging device controller 18 transmits the instruction for searching the power supply device along with the detected power value LV of the output power value of the validation power to the wireless communication unit 19 of the charging device (K'). The wireless communication unit 19 of the charging device outputs the request for searching the power supply device along with the detected power value LV of the output power value of the validation power by broadcasting through the antenna 20 of the charging device (L').

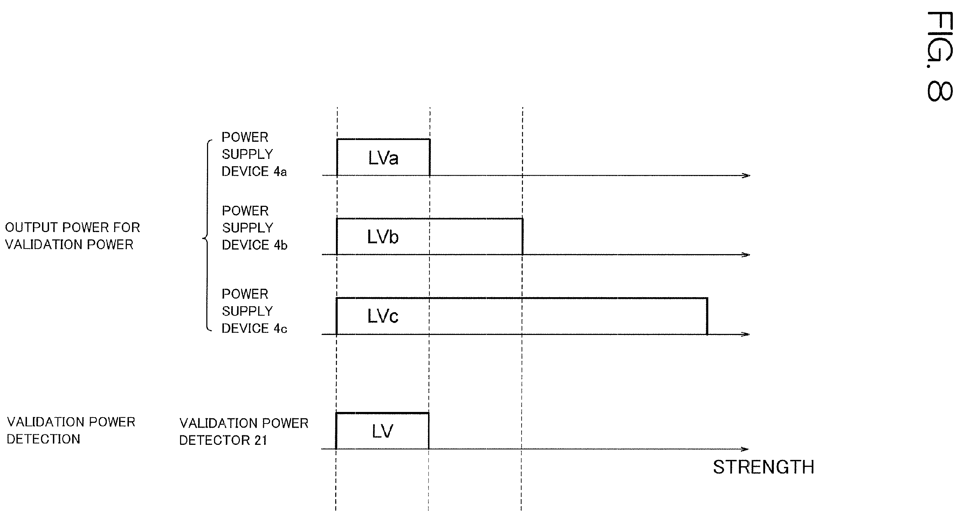

Where the wireless communication unit 12a of the power supply device receives the request for searching the power supply device through the antenna 13a of the power supply device, the wireless communication unit 12a of the power supply device transmits the notification of the request for searching the power supply device along with the detected power value LV of the output power value of the validation power to the power supply device controller 11a (M'). As shown in Fig. 8, the power supply device controller 11a validates the detected power value LV of the output power value of the validation power with the output power value LVa of the validation power (Na' in Fig. 6). Likewise, the power supply device controllers (not shown) of the power supply devices 4b, 4c which have received the request for searching the power supply device also validate the detected power value LV of the output power value of the validation power with the output power valued LVb, LVc of the validation power (Nb', Nc' in Fig. 6). In Embodiment 2, the detected power value LV of the output power value of the validation power matches the output power value LVa of the validation power. Therefore, the power supply device controller 11a transmits a response instruction for the search to the wireless communication unit 12a of the power supply device (O'). Since the detected power value LV of the output power value of the validation power does not match the output power values LVb, LVc of the validation power, no operation is performed in the power supply device controllers (not shown) of the power supply devices 4b, 4c. Subsequent operations are the same as those in Embodiment 1.

Thus, the power supply devices 4a, 4b, 4c hold in advance the patterns of the power to be supplied to the power supply coil 6a and the power supply coils (not shown) of the power supply devices 4b, 4c for generating the validation power on the basis of respectively different output power values LVa, LVb, LVc of the validation power, and the patterns of the power to be supplied to the power supply coil 6a and the power supply coils (not shown) of the power supply devices 4b, 4c for generating the validation power are generated such that the output power values LVa, LVb, LVc of the validation power can be detected by the validation power detector 21 when the validation power is detected by the validation power detector 21. The charging device 5 sends a request for starting the power supply device to the power supply devices 4a, 4b, 4c, the power supply devices 4a, 4b, 4c which have received the request for starting the power supply device output the validation power from the power supply coil 6a and the power supply coils (not shown) of the power supply devices 4b, 4c, the validation power is input to the power receiving coil 7, the validation power detector 21 detects the validation power, the charging device 5 sends a wireless connection request including the detected power value LV of the output power value of the validation power, the power supply devices 4a, 4b, 4c validate the output power values LVa, LVb, LVc of the validation power with the detected power value LV of the output power value of the validation power, and the power supply device 4a for which the output power value LVa, LVb, LVc of the validation power matches the detected power value LV of the output power value of the validation power responds to the charging device 5, thereby making it possible to obtain the same effect as in Embodiment 1.

### Embodiment 3

The configuration of the contactless charging system according to Embodiment 3 of the invention is described hereinbelow.

In the contactless charging system according to Embodiment 3 of the invention, a delay time from the reception of the output request to the output is used as the measurement value in Embodiment 1 for specifying the parking position of the vehicle. The different output delay times Dta, Dtb, Dtc of the validation power, which are pieces of identification information for identifying the power supply devices 4a, 4b, 4c that have been assigned in advance to the power supply devices 4a, 4b, 4c, are stored in the power supply device controller 11a of the power supply device 4a and power supply device controllers (not shown) of the power supply devices 4b, 4c. Other features of the contactless charging system are the same as those in Embodiment 1.

The operation of the contactless charging system according to Embodiment 3 of the invention is explained hereinbelow.

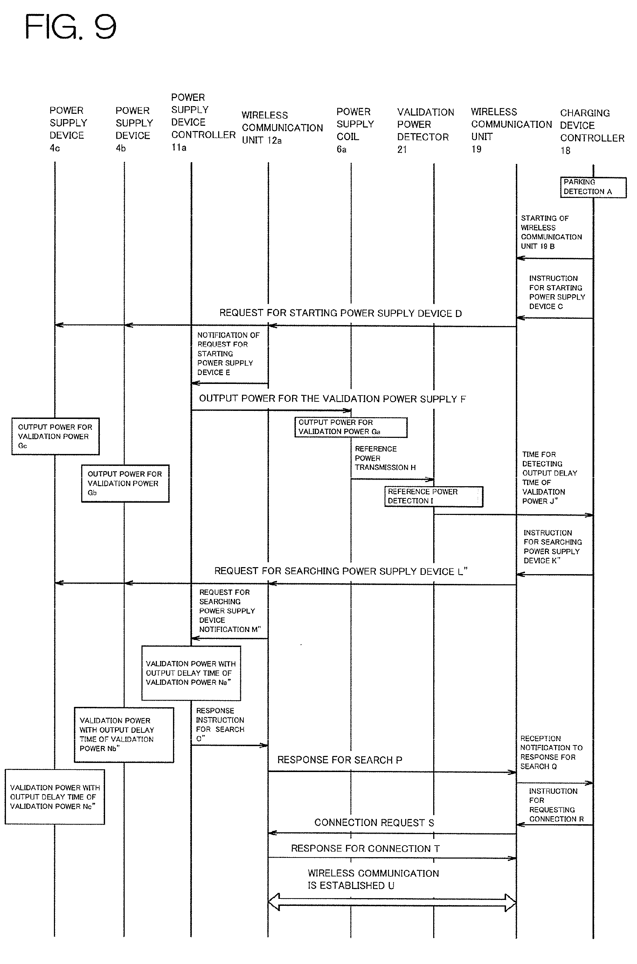

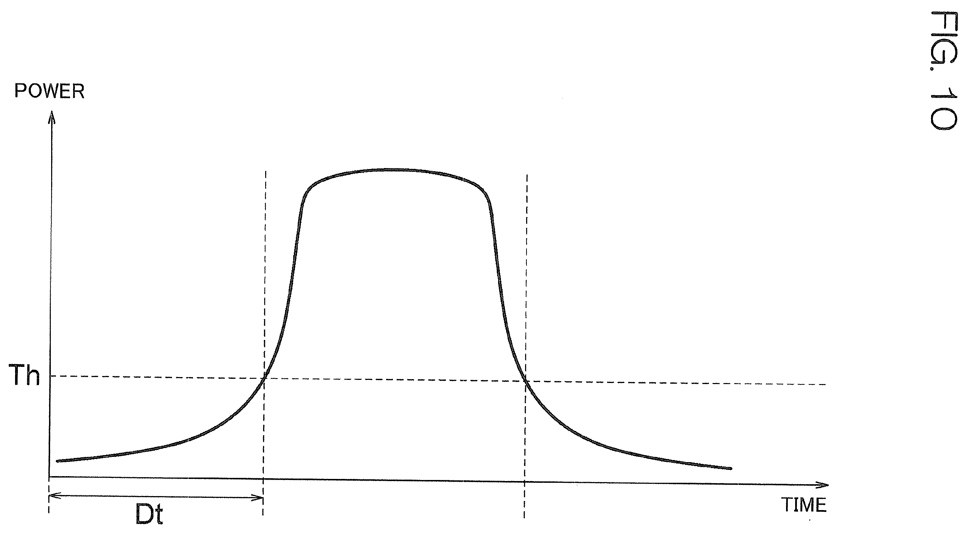

Fig. 9 shows the example of the sequence of Embodiment 3. In Fig. 9, the same letters as those in Fig. 3 represent the same operations, and the operations denoted by the letters of Fig. 3 which are marked with ["] are modified from the corresponding operations shown in Fig. 3. The operations from (A) to (I) in which the validation power generated by the power receiving coil 7 is detected by the validation power detector 21 are the same as those in Embodiment 1. As shown in Fig. 10, the time Dt for detecting the output delay time of the validation power, for which the detected value exceeds a threshold Th, is detected in the validation power detector 21. This detected time Dt of the output delay time of the validation power is information based on the identification information. For example, in the case of the output delay time Dta of the validation power of the power supply device 4a, this is the delay time from when the output request from the wireless communication unit 19 of the charging device is received by the power supply device controller 11a until when the validation power is output from the power supply coil 6a. Likewise, with respect to the power supply devices 4b, 4c, the output delay times Dtb, Dtc of the validation power are the delay times from when the output request from the wireless communication unit 19 of the charging device is received by the power supply controllers (not shown in the figure) until when the validation power is output from the power supply coils (not shown in the figure). In this case, the detected value may be a current value or a voltage value. Further, the power for generating the validation power in the power supply coil 6a of the power supply device 4a and the power supply coils (not shown) of the power supply devices 4b, 4c is controlled on the basis of the pattern of the power created in the power supply device controller 11a of the power supply device 4a and the power supply device controllers (not shown) of the power supply devices 4b, 4c, such that the time Dt for detecting the output delay time of the validation power matches the output delay times Dta, Dtb, Dtc of the validation power. The validation power detector 21 notifies the charging device controller 18 of the time Dt for detecting the output delay time of the validation power (J"). The validation power is also supplied to the power supply coils (not shown) of the power supply devices 4b, 4c, and the validation power is output. However, since the vehicle 3 in which the charging preparation sequence has been implemented is not at the parking position of the charging stations 2b, 2c, the power receiving coil 7 does not face the power supply coil with a predetermined air gap being present therebetween, and no electromagnetic induction is generated. Therefore, the validation power is not transmitted to the vehicle 3.

The charging device controller 18 transmits the instruction for searching the power supply device along with the time Dt for detecting the output delay time of the validation power to the wireless communication unit 19 of the charging device (K"). The wireless communication unit 19 of the charging device outputs the request for searching the power supply device along with the time Dt for detecting the output delay time of the validation power by broadcasting through the antenna 20 of the charging device (L").

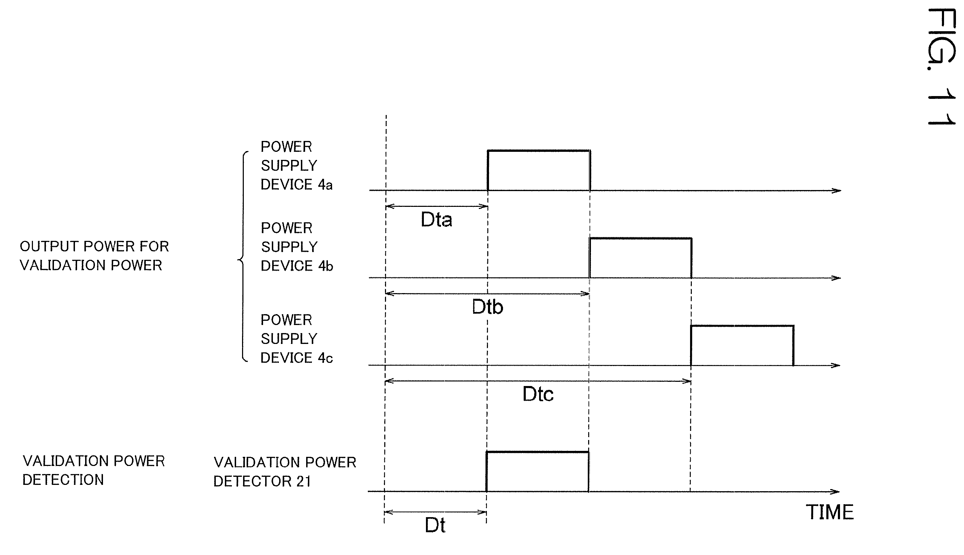

Where the wireless communication unit 12a of the power supply device receives the request for searching the power supply device through the antenna 13a of the power supply device, the wireless communication unit 12a of the power supply device transmits the notification of the request for searching the power supply device along with the detected power value LV of the output power value of the validation power to the power supply device controller 11a (M"). As shown in Fig. 11, the power supply device controller 11a validates the time Dt for detecting the output delay time of the validation power with the output delay time Dta of the validation power (Na" in Fig. 9). Likewise, the power supply device controllers (not shown) of the power supply devices 4b, 4c which have received the request for searching the power supply device also validate the time Dt for detecting the output delay time of the validation power with the output delay times Dtb, Dtc of the validation power (Nb", Nc" in Fig. 9). In Embodiment 2, the time Dt for detecting the output delay time of the validation power matches the output delay time Dta of the validation power. Therefore, the power supply device controller 11a transmits a response instruction for the search to the wireless communication unit 12a of the power supply device (O"). Since the time Dt for detecting the output delay time of the validation power does not match the output delay times Dtb, Dtc of the validation power, no operation is performed in the power supply device controllers (not shown) of the power supply devices 4b, 4c. Subsequent operations are the same as those in Embodiment 1.

Thus, the power supply devices 4a, 4b, 4c hold in advance the patterns of power to be supplied to the power supply coil 6a and the power supply coils (not shown) of the power supply devices 4b, 4c for generating the validation power on the basis of respectively different output delay times Dta, Dtb, Dtc of the validation power, and the patterns of power to be supplied to the power supply coil 6a and the power supply coils (not shown) of the power supply devices 4b, 4c for generating the validation power are generated such that the output delay times Dta, Dtb, Dtc of the validation power can be detected by the validation power detector 21 when the validation power is detected by the validation power detector 21. The charging device 5 sends a request for starting the power supply device to the power supply devices 4a, 4b, 4c, the power supply devices 4a, 4b, 4c which have received the request for starting the power supply device output the validation power from the power supply coil 6a and the power supply coils (not shown) of the power supply devices 4b, 4c, the validation power is input to the power receiving coil 7, the validation power detector 21 detects the validation power, the charging device 5 sends a wireless connection request including the time Dt for detecting the output delay time of the validation power, the power supply devices 4a, 4b, 4c validate the output delay times Dta, Dtb, Dtc of the validation power with the time Dt for detecting the output delay time of the validation power, and the power supply device 4a for which the output delay time Dta, Dtb, Dtc of the validation power matches the time Dt for detecting the output delay time of the validation power responds to the charging device 5, thereby making it possible to obtain the same effect as in Embodiment 1.

In Embodiments 1 to 3, the number of the charging stations provided in the contactless charging system 1 is 3 which are the charging stations 2a, 2b, 2c, but the number of the charging stations may be 1, 2, 4, or more.

In Embodiments 1 to 3, the operations (Q) and (R) and then the operation (S) are performed after the wireless communication unit 19 of the charging device 5 of the vehicle 3 has received the response for the search through the antenna 20 of the charging device, as shown in Figs. 3, 6, and 9, but the operation (S) may be performed after the response for the search has been received without performing the operations (Q) and (R).

## Claims

1. A contactless charging system that comprises a charging device installed in a vehicle, and at least one charging station and performs contactless charging,
wherein the at least one charging station includes:
a power supply device that supplies power to the charging device;
a wireless communication unit of the power supply device that is provided at the power supply device and performs wireless communication; and
a power supply coil that is provided at the power supply device and performs contactless output of validation power and contactless supply of charging power,
wherein the charging device includes:
a wireless communication unit of the charging device for performing the wireless communication;
a power receiving coil to which the validation power is contactlessly input and which contactlessly receives the charging power; and
a validation power detector for detecting the validation power received by the power receiving coil, and
wherein the wireless communication is possible between the charging device and the at least one power supply device, the power supply device holds in advance a pattern of the power to be supplied to the power supply coil for generating the validation power on the basis of different types of identification information, the pattern of the power to be supplied to the power supply coil for generating the validation power is generated such that the validation power detector can detect the identification information when the validation power is detected by the validation power detector, the charging device sends a request for starting the power supply device to the power supply device, the power supply device which has received the request for starting the power supply device outputs the validation power from the power supply coil, the validation power is input to the power receiving coil, the validation power detector detects the validation power, the charging device sends a wireless connection request including information based on the identification information, the at least one power supply device validates each piece of identification information with the information based on the identification information, and a power supply device for which the identification information have matched the information based on the identification information responds to the charging device, thereby specifying the power supply device which is to perform the wireless communication with the charging device, among the at least one or more power supply devices, and establishing the wireless communication between the power supply device and the charging device.

2. The contactless charging system according to claim 1, wherein the validation power is less than the charging power when the contactless charging from the power supply device to the charging device is performed.

3. The contactless charging system according to claim 1 or 2, wherein the identification information is an output time of the validation power.

4. The contactless charging system according to claim 1 or 2, wherein the identification information is an output power value of the validation power.

5. The contactless charging system according to claim 1 or 2, wherein the identification information is a delay time from when the power supply device receives the request for starting the power supply device until the validation power is output.

6. A vehicle comprising a charging device, which is charged contactlessly by at least one charging station including:
a power supply device that supplies power to the charging device;
a wireless communication unit of the power supply device that is provided at the power supply device and performs wireless communication; and
a power supply coil that is provided at the power supply device and performs contactless output of validation power and contactless supply of charging power,
wherein the charging device includes:
a wireless communication unit of the charging device for performing the wireless communication;
a power receiving coil which is provided in the charging device, to which the validation power is contactlessly input and which contactlessly receives the charging power; and
a validation power detector for detecting the validation power received by the power receiving coil, and
wherein the wireless communication is possible between the charging device and the at least one power supply device, the power supply device holds in advance a pattern of the power to be supplied to the power supply coil for generating the validation power on the basis of different types of identification information, the pattern of power to be supplied to the power supply coil for generating the validation power is generated such that the validation power detector can detect the identification information when the validation power is detected by the validation power detector, the charging device sends a request for starting the power supply device to the power supply device, the power supply device which has received the request for starting the power supply device outputs the validation power from the power supply coil, the validation power is input to the power receiving coil, the validation power detector detects the validation power, the charging device sends a wireless connection request including information based on the identification information, the at least one power supply device validates each piece of identification information with the information based on the identification information, and a power supply device for which the identification information has matched the information based on the identification information responds to the charging device, thereby specifying the power supply device which is to perform the wireless communication with the charging device, among the at least one or more power supply devices, and establishing the wireless communication between the power supply device and the charging device.

7. A power supply device comprising:
a power supply device wireless communication unit for performing wireless communication; and
a power supply coil that performs contactless output of validation power and contactless supply of charging power,
the power supply device being provided at at least one charging station and supplying power to a charging device installed in a vehicle,
wherein the charging device includes:
a wireless communication unit of the charging device for performing the wireless communication;
a power receiving coil to which the validation power is contactlessly input and which contactlessly receives the charging power; and
a validation power detector for detecting the validation power received by the power receiving coil, and
wherein the wireless communication is possible between the charging device and the at least one power supply device, the power supply device holds in advance a pattern of the power to be supplied to the power supply coil for generating the validation power on the basis of different types of identification information, the pattern of the power to be supplied to the power supply coil for generating the validation power is generated such that the validation power detector can detect the identification information when the validation power is detected by the validation power detector, the charging device sends a request for starting the power supply device to the power supply device, the power supply device which has received the request for starting the power supply device outputs the validation power from the power supply coil, the validation power is input to the power receiving coil, the validation power detector detects the validation power, the charging device sends a wireless connection request including information based on the identification information, the at least one power supply device validates piece of each identification information with the information based on the identification information, and a power supply device for which the identification information has matched the information based on the identification information responds to the charging device, thereby specifying the power supply device which is to perform the wireless communication with the charging device, among the at least one or more power supply devices, and establishing the wireless communication between the power supply device and the charging device.
